Europäisches Patentamt

European Patent Office

Office européen des brevets

(11) Publication number: **0 311 923**
**A1**

## EUROPEAN PATENT APPLICATION

(21) Application number: **88116628.4**

(51) Int. Cl.⁴: **B60R 22/00**

(22) Date of filing: **07.10.88**

(30) Priority: **15.10.87 IT 2254687 U**

(43) Date of publication of application:
**19.04.89 Bulletin 89/16**

(84) Designated Contracting States:
**AT BE CH DE ES FR GB GR IT LI LU NL SE**

(71) Applicant: **Zezzo, Alexander**
**Via Boeri No 11**
**I-20100 Milano(IT)**

(72) Inventor: **Zezzo, Alexander**
**Via Boeri No 11**
**I-20100 Milano(IT)**

(74) Representative: **Petruzzelli, Antonio**
**Via E. De Amicis No. 25**
**I-20123 Milano(IT)**

(54) Cushioning device for safety belts.

(57) A cushioning device (2) for a seat (1) comprising
a pad member (3) and a pad supporting member (4)
having a rear surface (13) provided with connecting
means (16) to sliding connect the cushioning device
(2) to the seat belt (1).

Fig. 6

EP 0 311 923 A1

## CUSHIONING DEVICE FOR SAFETY BELTS

This invention relates to the seat belt sector and in particular refers to a shock-absorber or cushioning device that is placed between a safety belt and a part of the passenger's body which is subject to most stress, particularly suitable for application to seat belts fitted to automobiles and the like, in order to dampen the contact pressure between the belt and shoulder or upper part of the body.

In said belts, especially in cross-fastening belts, in which the belt extends over a shoulder of a person seated in the automobile, the contact pressure of the belt on the shoulder and/or chest caused by unexpected braking while the vehicle is in motion, can cause considerable irritation and soreness to the parts of the body which come under most pressure and stress; moreover the continual rubbing action of the belt on the person's clothes can cause wear and tear.

An object of this invention is to provide a cushioning device for seat belts, preventing the above inconveniences, capable of dampening any impact force or strong pressure on the body by the belt which may occur while the vehicle is in motion, thereby making the contact between the belt and the person more comfortable and eliminating or noticeably reducing the rubbing of the belt against the person.

According to the invention a cushioning device for a seat belt has been provided, the device comprising a pad member in soft or elastomeric material, such as polyurethane foamed material, and a pad support member, the pad support member furthermore comprising connecting means for sliding connecting said support member to the seat belt.

The cushioning device is applied to the seat belt so that the soft pad, is facing the person and positioned on that part of the belt which is most directly in contact with the shoulder, so that, if sudden braking should occur, when the belt exerts a high degree of pressure on the collar-bone, the pad absorbs most of this pressure to a sufficiently high extent so as not to cause pain.

This invention will be described and illustrated in greater detail with reference to the figures of the accompanying drawings, in which:

Fig. 1 shows a person seated inside an automobile fastened by a seat belt provided with a shock-absorbing or cushioning device according to the invention;

Fig. 2 is a cross-sectional view of the cushioning device of Fig. 1;

Fig. 3 and 5 show different solutions for fastening the cushioning device to the seat belt.

Fig. 6 is a top view of a further embodiment of a cushioning device according to the invention;

Fig. 7 is a cross-sectional view according to 7-7 of figure 6.

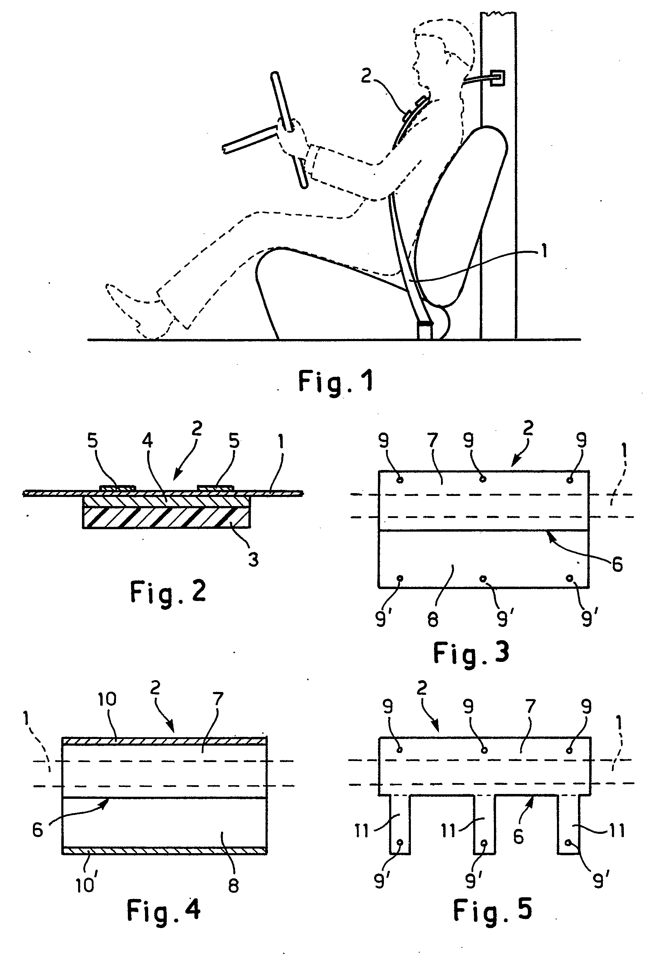

As shown in the figures, reference 1 indicates an ordinary cross-fastening seat belt which is normally used on cars for retaining a person fastened to a seat, in which the belt 1 is provided with a cushioning device 2. According to the invention, the device 2 comprises a pad member 3 made of soft material, adhered or attached to the fore face of a support member 4; the rear face of support member 4 is provided with one or more connecting means 5, through which the seat belt 1 may slide; the connecting means 5 may be of any suitable form, more particularly said connecting means are in the form of a loop member having one or both ends attachable and detachable from the support member 4, to sliding connect or to remove the cushioning device 2 from the seat belt 1. For example, as shown in figure 3 the loop member is in the form of a foldable flap or wing 8 hinged at 6 on a side of a support member 7 having the same length of flap 8; the opposing longitudinal edges of wing 8 and support member 7 are provided with snap fasteners or hooks 9, 9' to close wing 8 onto member 7 allowing the cushioning device 2 to be sliding supported by the seat belt 1.

Figure 4 refers to a further embodiment similar to that of figure 3 in which self adhering strips 10, 10' have been provided in substitution of snap fasteners 9, 9' of figure 3. In figure 5 the cushioning device has been provided with three loop members 11 having single snap fasteners 9, 9'.

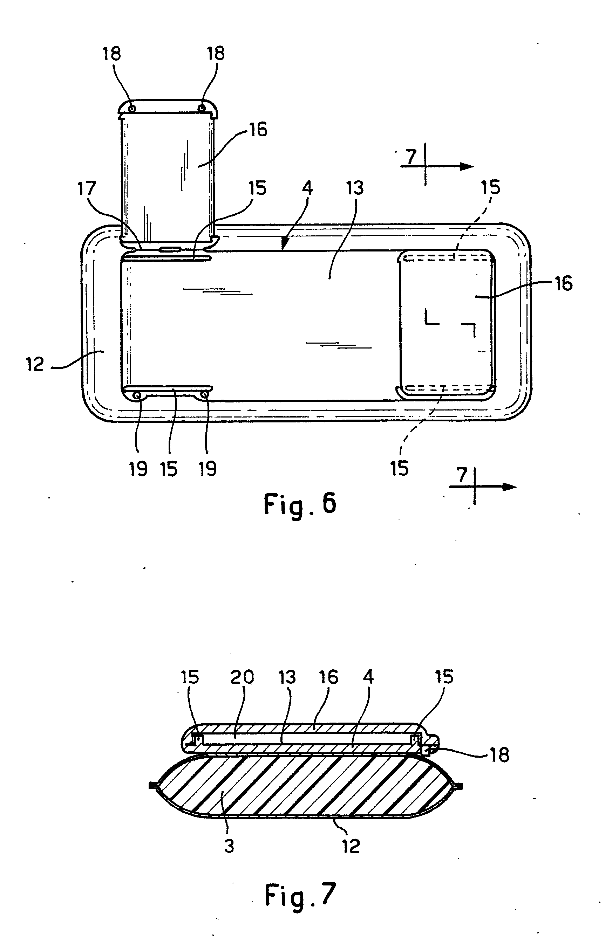

Figure 6 and 7 represent a further embodiment of the cushioning device 2. In figures 6 and 7 the cushioning device 2 comprises a pad member 3 of elastomeric material, provided with a covering 12 of suitable material. The pad member 3 is in the form of an elongated body having a width larger than the belt 1, to provide a large cushioning surface. A support plate 4 of plastic material having a sufficient degree of rigidity, is connected to rear face of covering 12 to provide guide and connecting means for belt 1. More particularly the support plate 4 comprises a flat body having a front face for adhering to pad member 3 or lining 12, and a rear face 13 provided at each end with longitudinal ribs 15 near to lateral edges; the ribs 15 protrude from the face 13 for an height equal to or higher than the thickness of the belt 1. A retaining wing 16 is hinged at 17 to a side of the support plate 4, near to a rib 15; the wing 16 at the end opposite to hinge 17 comprises pins 18 which may be snap fitted or pressed into holes 19 on the plate 4, outside the opposite rib 15. The support plate 4, the ribs 15 and the retaining wing 16, as shown at the right side of figure 6 and in figure 7, define closed loops 20 for seat belt 1, allowing said cushioning device 2 to slide with respect to the belt.

From the foregoing it is evident that a cushioning device for seat belts has been provided comprising a soft pad member sliding supported along the seat belt, which may be positioned near the collar-bone to absorbe the pressure on the shoulder from the seat belt; therefore a more confortable seat belt may be provided for the user to prevent and eliminate pain.

## Claims

1. A cushioning device for a seat belt characterized by comprising a pad member (3) in soft or elastomeric material, and a pad supporting member (4, 7), said pad supporting member (4, 7) having a rear surface (13) on a side opposite to the pad member (3), and connecting means (5, 8, 11, 16) on said rear surface (13), said connecting means (5, 8, 11, 16) sliding connecting said pad supporting member (4) to the seat belt (1).

2. A cushioning device according to claim 1, characterized by comprising a covering (12) for said pad member (3).

3. A cushioning device according to claim 1, characterized in that said connecting means (5, 8, 11, 16) comprises at least one loop member arranged on the rear side of the pad support member (4) said loop member comprising guiding means (15) for the seat belt (1).

4. A cushioning device according to claim 1, characterized in that said loop member comprises a wing member (8, 11, 16) hingedly connected to one side of the pad supporting member (4), and fastening means on opposite edges of the wing member (8, 11, 16) and pad support member (4) mentioned above.

5. A cushioning device according to claim 1, characterized by comprising a plate shaped pad supporting member (4) having front an rear faces, a pad member (3) adhered to the front face of said plate member (4), said pad member (3) having a front cushioning surface larger than said plate member (4); guide means for the belt (1) on the rear face (13) of said plate member (4) said guide means comprising spaced apart ribs (15), and at least one belt connecting member having a wing (16) hingedly connected to and overlapping said guide ribs.

6. A cushioning device according to claim 5, characterized in that said wing member (16) and said plate member comprise snap fitting hole and pin connecting means.

Fig. 1

Fig. 2

Fig. 3

Fig. 4

Fig. 5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 169 187 (DAVIES)<br>* page 1, line 130 - page 2, line 78 *<br>--- | 1-6 | B 60 R 22/00 |
| X | GB-A-1 178 512 (MITCHELL)<br>* figure 3; page 1, lines 23-53 * | 1-4 | |
| A | --- | 5,6 | |
| X | DE-A-3 501 747 (RAAB)<br>* claim 1 * | 1-4 | |
| A | --- | 5,6 | |
| X | BE-A- 849 336 (KARIM)<br>* the whole page, page 2 *<br>----- | 1,3 | |

TECHNICAL FIELDS SEARCHED (Int. Cl.4)

B 60 R 22/00

The present search report has been drawn up for all claims

| Place of search | Date of completion of the search | Examiner |
|---|---|---|
| BERLIN | 06-01-1989 | STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)